# EUROPÄISCHE PATENTSCHRIFT

(11) **EP 4 276 232 B1**
(45) Veröffentlichungstag und Bekanntmachung des Hinweises auf die Patenterteilung: **11.06.2025**
(21) Anmeldenummer: 23166543.1
(22) Anmeldetag: 04.04.2023
(51) Int. Cl.: D06F 33/43, A47L 15/00, A47L 15/42, B01D 37/04, C02F 1/00, D06F 33/00, D06F 39/10, B01D 35/143, D06F 103/02, D06F 103/18, D06F 103/20, D06F 103/70, D06F 105/34

(54) **VERFAHREN ZUM BESTIMMEN EINES ZUSTANDS EINES FILTERS EINES WASSERFÜHRENDEN HAUSHALTSGERÄTS UND WASSERFÜHRENDES HAUSHALTSGERÄT**
METHOD FOR DETERMINING A STATE OF A FILTER OF A WATER-CONDUCTING DOMESTIC APPLIANCE AND WATER-CONDUCTING DOMESTIC APPLIANCE
PROCÉDÉ DE DÉTERMINATION D'UN ÉTAT D'UN FILTRE D'UN APPAREIL MÉNAGER À CIRCULATION D'EAU ET APPAREIL MÉNAGER À CIRCULATION D'EAU

(30) Priorität: 09.05.2022 DE 102022204525
(43) Veröffentlichungstag der Anmeldung: 15.11.2023
(73) Patentinhaber: BSH Hausgeräte GmbH, 81739 München (DE)
(72) Erfinder: König, Thomas, 10585 Berlin (DE); Eglmeier, Hans, 10587 Berlin (DE); Bischof, Andreas, 10407 Berlin (DE)

(56) Entgegenhaltungen:
- WO-A1-2016/045554
- KR-A- 20040 110 807
- KR-A- 20140 008 707
- KR-B1- 101 715 802

## Beschreibung

Die Erfindung betrifft ein Verfahren zum Bestimmen eines Zustands eines Filters eines wasserführenden Haushaltsgeräts und ein wasserführendes Haushaltsgerät.

Es ist bekannt einen Filter in einem wasserführenden Haushaltsgerät zu verwenden, um Verunreinigungen, insbesondere Feststoffe aus einem Fluid zu filtern. Der verwendete Filter muss regelmäßig gereinigt oder ausgetauscht werden. Üblicherweise erfolgt die Reinigung oder der Austausch, in anderen Worten ein Wechsel, des Filters nach Ablauf eines gewissen Zeitintervalls. Die Zeitintervalle sind dabei üblicherweise so gewählt, dass gewährleistet ist, dass der Filter seine maximale Aufnahmekapazität an Verunreinigungen nicht erreicht hat. Damit soll vermieden werden, dass der Filter einen Zustand erreicht, in welchem er so viele Verunreinigungen aufgenommen hat, dass kein Fluid mehr gefiltert werden kann und/oder das wasserführende Haushaltsgerät kein Wasser mehr abpumpen kann und der Behandlungsvorgang in dem wasserführenden Haushaltsgerät somit abgebrochen werden muss. Der Austausch oder die Reinigung des Filters in kurzen Zeitintervallen hat jedoch den Nachteil, dass der Filter möglicherweise schon zu einem Zeitpunkt gereinigt oder ausgetauscht wird, an dem dieser seine maximale Aufnahmekapazität noch nicht erreicht hat. Ein zu häufiger Filterwechsel oder eine zu häufige Filterreinigung ist mit einem unnötig hohen Arbeits-, Zeit- und Kostenaufwand verbunden.

Die KR 101 715 802 B1 offenbart eine Waschmaschine mit einer Entleerungspumpe und einem Filter im Abpumpstrang, bei der im Betrieb eine nicht näher definierte Abnormität beim Abpumpen festgestellt und daraufhin eine Meldung angezeigt wird.

Die KR 2004 0110 807 A zeigt eine Waschmaschine mit einem Filter und einem Filterüberwachungssystem. Dazu zählt das System die Anzahl der Benutzungsfälle der Waschmaschine. Dem Benutzer wird bei Überschreiten einer bestimmten Anzahl von Benutzungen eine Aufforderung angezeigt, den Filter zu inspizieren bzw. bei einer höheren Anzahl von Benutzungsfällen den Filter auszutauschen.

Die KR 2014 0008 707 A betrifft die Regeneration von Lösungmitteln die in der Trockenreinigung Verwendung finden, mittels eines Filters. Ziel ist es, die teuren und umweltkritischen Lösungsmittel so lange wie möglich nutzen zu können. Dazu wird ein Verfahren vorgeschlagen, welches die chemische Zusammensetzung des Lösungsmittels überwacht und bei einem gewissen Anteil an einzelnen Bestandteilen oder deren Reagenzien eine Information zum Austausch des Filters und/oder des Lösungsmittels ausgibt.

Die WO 2016/45554 A1 offenbart eine Waschmaschine mit einem Filter, welches in einem Umpumpkreislauf angeordnet ist. Es wird der Durchfluß durch das Filter überwacht und wenn dieser unter einen bestimmten Wert fällt wird der Benutzer aufgefordert ein Filterreinigungsprogramm zu starten.

Daher ist es Aufgabe der Erfindung, ein Verfahren und ein wasserführendes Haushaltsgerät bereitzustellen, welche es ermöglichen, den Filter zum optimalen Zeitpunkt auszutauschen und/oder zu reinigen.

Diese Aufgabe wird gelöst durch ein Verfahren mit den Merkmalen des Anspruchs 1 und ein wasserführendes Haushaltsgerät mit Merkmalen des Anspruchs 10.

Gemäß einem Aspekt der vorliegenden Erfindung wird ein Verfahren zur Bestimmung eines Zustands eines Filters eines wasserführenden Haushaltsgeräts bereitgestellt, wobei der Filter dazu ausgestaltet ist, Partikel aus einem Fluid zu filtern. Das Verfahren umfasst ein Erlangen von Betriebsinformationen des wasserführenden Haushaltsgeräts und ein Ermitteln des Zustands des Filters basierend auf den Betriebsinformationen. Gemäß der Erfindung umfasst das Verfahren das Bestimmen einer von dem Filter zu filternden Partikelfracht basierend auf den Betriebsinformationen, wobei der Zustand des Filters basierend auf der Partikelfracht ermittelt wird und die Betriebsinformationen Informationen über. b) eine Beladung des wasserführenden Haushaltsgeräts mit zu behandelnden Artikeln, c) eine Beschaffenheit der zu behandelnden Artikel, d) eine Beschaffenheit eines zur Verfügung stehenden Behandlungsmediums, e) eine Beschaffenheit eines oder mehrerer Behandlungsmittel, f) eine Art eines Behandlungsvorgangs, g) eine Trübung des Fluids und/oder h) eine Wassermenge umfassen. Gemäß der Nachtrag Erfindung umfasst das Verfahren ferner eine Ausgabe der Informationen über den Zustand des Filters an einen Nutzer.

Gegenüber dem bekannten Stand der Technik kann der Zustand des Filters mittels Betriebsinformationen ermittelt werden, welche von dem wasserführenden Haushaltsgerät erlangt werden. In anderen Worten kann der derzeitig vorliegende, reale Zustand des Filters in einem wasserführenden Haushaltsgerät individuell ermittelt werden. Dies kann erfolgen, indem Informationen über den Betrieb und/oder während des Betriebs des wasserführenden Haushaltsgeräts erlangt und bei der Ermittlung des Filterzustands berücksichtigt werden. Das Erlangen von Betriebsinformationen kann mit dem in dem wasserführenden Haushaltsgerät bereits vorhandenen Sensoren oder Informationen erfolgen. Das Ermitteln des realen Filterzustands hat den Vorteil, dass sichergestellt wird, dass ein Austausch und/oder eine Reinigung des Filters erfolgen kann, bevor der Filter seine maximale Aufnahmekapazität erreicht hat, in anderen Worten bevor der Filter voll ist. Das erfindungsgemäße Verfahren und das erfindungsgemäße wasserführende Haushaltsgerät ermöglichen, zu ermitteln, wie viele Behandlungsvorgänge bis zum Austausch und/oder zur Reinigung des Filters verbleiben. Es wird verhindert, dass der Filter öfter als notwendig ausgetauscht und/oder gereinigt wird. Das erfindungsgemäße Verfahren und wasserführende Haushaltsgerät ermöglichen eine längere Nutzungsdauer des Filters, indem der optimale Zeitpunkt für den Filterwechsel ermittelt wird und ein zu häufiger, unnötiger Filterwechsel vermieden werden kann. Die Filterstandzeit, also die Zeit zwischen dem Austausch und/oder der Reinigung des Filters und dem nächsten Austausch und/oder der nächsten Reinigung, kann überraschenderweise um 25% erhöht werden, wodurch Wartungsaufwand für den Kunden und damit verbundene Kosten vermindert werden. Ferner wird im Falle von Einwegfiltern Müll vermieden und eine unnötige Umweltbelastung verhindert.

Das wasserführende Haushaltsgerät kann ein Wäschebehandlungsgerät, ein Waschtrockner oder ein Wäschetrockner sein. Ferner kann das wasserführende Haushaltsgerät eine Spülmaschine sein. Es ist denkbar, das Verfahren bei allen wasserführenden Haushaltsgeräten einzusetzen, die einen Filter aufweisen.

Die Partikel können Feststoffe, insbesondere einen Abrieb von zu behandelnden Artikeln wie beispielswiese Textilien, Geschirr usw., umfassen. Die Partikel können Flusen, Fasern und/oder Mikroplastik umfassen. Ferner können die Partikel Sand, Fett, Haare, Hautschuppen und/oder Gegenstände wie Haarklammern, Münzen, Muttern, Schrauben, Schmuck, Nadeln und/oder Nägel umfassen.

Das Fluid kann ein Gas, eine Flüssigkeit oder ein Gemisch sein. In einem wasserführenden Haushaltsgerät kann das Fluid ein Behandlungsmedium sein. Das Behandlungsmedium kann Wasser, insbesondere Leitungswasser, und/oder Luft umfassen. Das Fluid kann ein Gemisch aus Wasser, Leitungswasser und/oder Luft mit einem oder mehreren Behandlungsmitteln, insbesondere Mittel zur Pflege, Reinigung und/oder Behandlung von Textilien und/oder Geschirr, umfassen.

Der Filter kann dazu ausgestaltet sein, die Partikel aus einem Fluid zurückzuhalten, aufzunehmen und/oder zu filtern. Der Filter kann ein Gehäuse, einen Fluidzulauf, einen Filterauslauf und eine Filterfläche umfassen. Das Fluid kann durch den Filterzulauf in den Filter eintreten und anschließend auf die Filterfläche auftreffen, an der das Fluid von Partikeln gereinigt wird. Ein Filtrat (d.h. das gereinigte Fluid) kann dann stromabwärts der Filterfläche weitergeführt werden und durch den Filterauslauf den Filter wieder verlassen. Die Filterfläche kann derart ausgestaltet sein, dass aus der Filterfläche das Filtrat austreten kann und die zu filternden Partikel in dem Filter zurückgehalten werden. Das Filtrat kann ein gefiltertes Fluid sein. Die Filterfläche kann eine Filtermembran sein. Die Filtermembran kann eine flexible Filtermembran sein. Die flexible Filtermembran kann ein Gewebe, ein Papier, ein Textil und/oder ein Vlies umfassen. Ferner kann der Filter ein oder mehrere starre und/oder poröse Filtermembranen umfassen. Die starre Filtermembran kann Kunststoff, Metall und/oder Keramik umfassen. Der Filter kann eine Kleinteilfalle, eine Fremdkörperfalle, ein Mikroplastikfilter, ein Flusenfilter, ein Flusensieb und/oder ein Ablauffilter sein.

Der Zustand des Filters kann einen Füllzustand umfassen. Der Füllzustand kann eine Menge an Partikeln in dem Filter umfassen. Unter der Menge an Partikeln in dem Filter kann die Anzahl, die Masse und/oder das Volumen der Partikel verstanden werden. Der Füllzustand kann ein relativer Füllzustand und/oder ein absoluter Füllzustand sein. Der relative Füllzustand kann die Menge an Partikeln sein, welche sich in dem Filter befindet, im Verhältnis zu einer maximalen Aufnahmekapazität. Die maximale Aufnahmekapazität kann die Menge an Partikel sein, welche der Filter maximal aufnehmen kann. Der absolute Füllzustand kann ein konkreter Zahlenwert für die Anzahl, die Masse (z.B. in Gramm) und/oder das Volumen (z.B. in mL oder cm³) der Partikel sein. Ferner kann der Zustand des Filters den am Filter anliegenden hydraulischen Druck und/oder den am Filter anliegenden hydraulischen Druck im Verhältnis zum hydraulischen Druck eines leeren Filters umfassen. Der leere Filter kann ein Filter sein, der frei von Partikeln ist, in anderen Worten ein neuer Filter oder ein frisch gereinigter Filter.

Die Betriebsinformationen des wasserführenden Haushaltsgeräts können Informationen über den aktuellen Behandlungsvorgang und/oder über die seit dem letzten Filterwechsel und/oder der letzten Filterreinigung erfolgten Behandlungsvorgänge umfassen. Der Behandlungsvorgang kann ein Waschgang und/oder ein Spülgang sein. Betriebsinformationen im Sinne der Erfindung können insbesondere alle oder einige Informationen und/oder Daten über Parameter und/oder Bedingungen umfassen, welche Einfluss auf den Zustand des Filters haben können.

Die Partikelfracht kann eine absolute oder eine relative Partikelfracht sein. Die absolute Partikelfracht kann die Anzahl, die Masse und/oder das Volumen der Partikel umfassen, welche dem Filter zugeführt werden. Die relative Partikelfracht kann die Anzahl, die Masse und/oder das Volumen der Partikel pro Volumeneinheit (z.B. ein Liter) des Fluids sein. Das Bestimmen der von dem Filter zu filternden Partikelfracht ermöglicht, zu bestimmen, welche Menge an Partikeln auf den Filter trifft. In anderen Worten kann bestimmt werden, wie stark der Filter belastet wird. Ferner kann bestimmt werden, welche Menge an Partikeln pro Behandlungsvorgang und/oder pro Zeiteinheit dem Filter zugeführt werden. Die Bestimmung der von dem Filter zu filternden Partikelfracht basierend auf den Betriebsinformationen hat den Vorteil, dass damit der Zustand des Filters (d.h. den Füllungsgrad des Filters) mit hoher Genauigkeit ermittelt werden kann. Unter einer hohen Genauigkeit kann eine geringe Abweichung zwischen dem ermittelten Zustand des Filters und dem realen Zustand des Filters verstanden werden. Die geringe Abweichung kann eine Differenz zwischen dem ermittelten Wert für den Filterzustand und dem realen Filterzustand von kleiner oder gleich 25%, bevorzugt kleiner oder gleich 15 %, bevorzugter kleiner oder gleich 10 % und besonders bevorzugt kleiner oder gleich 5 % umfassen. In anderen Worten kann der ermittelte Zustand des Filters, beispielsweise die Masse der Partikel in dem Filter, um ± 25%, bevorzugt ± 15%, bevorzugter ± 10%, besonderes bevorzugt ± 5% von dem tatsächlichen Filterzustand, beispielsweise der tatsächlichen Masse der Partikel in dem Filter, abweichen. Anders ausgedrückt kann beispielsweise die ermittelte Masse bis zu 25%, bevorzugt bis zu 15%, bevorzugter bis zu 10 % und besonders bevorzugt bis zu 5% kleiner oder größer sein als die tatsächliche Masse der Partikel in dem Filter.

Gemäß einer Ausführungsform können die Betriebsinformationen Informationen über a) eine Anzahl von Behandlungsvorgängen umfassen.

Die Informationen über a), nämlich die Anzahl von Behandlungsvorgängen, können die Anzahl von Behandlungsvorgängen seit dem letzten Filterwechsel und/oder der letzten Filterreinigung umfassen. Das Erlangen der Informationen über die Anzahl von Behandlungsvorgängen hat den Vorteil, dass Informationen darüber erhalten werden können, wie oft der Filter einer Partikelfracht ausgesetzt wurde. Basierend auf diesen Betriebsinformationen kann der Zustand des Filters einfach ermittelt werden. Ferner können basierend auf den Informationen über die Anzahl von Behandlungsvorgängen Informationen über den Zustand von weiteren Bauteilen erlangt werden, beispielsweise welches Bauteil oder welche Bauteile des wasserführenden Haushaltsgeräts repariert, ausgetauscht und/oder gereinigt werden müssen. Das Bauteil kann eine Laugenpumpe, einen Stoßdämpfer, einen Heizstab, einen Motor und/oder ein fluidleitendes Gleitlager umfassen.

Die Informationen über b), nämlich die Beladung des wasserführenden Haushaltsgeräts, können die Anzahl, die Masse und/oder das Volumen der zu behandelnden Artikel umfassen. Die zu behandelnden Artikel können Gegenstände umfassen, welche während eines Behandlungsvorgangs von dem wasserführenden Haushaltsgerät behandelt, gereinigt, gepflegt und/oder getrocknet werden. Die Beladung des wasserführenden Haushaltsgeräts mit zu behandelnden Artikeln kann mit der zu filternden Partikelfracht in einem nichtlinearen Verhältnis stehen. Bei einer geringen Beladung kann die absolute Partikelfracht gering sein, da nur eine geringe Anzahl, Masse und/oder ein geringes Volumen an zu behandelnden Artikeln in dem wasserführenden Haushaltsgerät behandelt wird. Die relative Partikelfracht kann gering sein, da das Volumen des verwendeten Behandlungsmedium (z.B. zugeführtes Wasser) im Verhältnis zur Anzahl, Masse und/oder dem Volumen der zu behandelnden Artikel groß ist. Bei einer hohen Beladung können die zu behandelnden Artikel selbst als Filter wirken und/oder sich gegenseitig vor Abrieb und/oder Reibung während eines Behandlungsvorgangs schützen und die zu filternde Partikelfracht in dem Fluid reduzieren. Bei einer hohen und/oder geringen Beladung kann die Partikelfracht gering sein. Bei einer mittleren Beladung kann eine ausreichend hohe Anzahl, Masse und/oder ein ausreichend hohes Volumen an zu behandelnden Artikeln vorhanden sein, um eine hohe Partikelfracht zu bewirken, aber eine zu geringe Anzahl, Masse und/oder ein zu geringes Volumen an zu behandelnden Artikeln, um zu ermöglichen, dass die zu behandelnden Artikel als Filter wirken und/oder eine Reibung und/oder einen Abrieb effektiv verhindern. Bei einer mittleren Beladung kann die Partikelfracht im Verhältnis zur Anzahl, Masse und/oder zum Volumen an zu behandelnden Artikeln am höchsten sein.

Die zu behandelnden Artikel können einen oder mehrere Gegenstände umfassen, welche während eines Behandlungsvorgangs in einem wasserführenden Haushaltsgerät behandelt (z.B. gereinigt) werden können. Die zu behandelnden Artikel können insbesondere Textilien und/oder Geschirr umfassen. Das Erlangen von Informationen über die Beladung des wasserführenden Haushaltsgeräts hat den Vorteil, dass damit eine Information darüber erhalten wird, wie hoch die absolute und/oder relative Partikelfracht basierend auf der Menge der Artikel ist. Das Erlangen der Informationen über die Beladung kann mittels Sensoren und/oder einer Auswertung von Messdaten erfolgen (weitere Details folgen unten).

Die Informationen über c), nämlich die Beschaffenheit der zu behandelnden Artikel, können Informationen über das Material umfassen, aus welchem die zu behandelnden Artikel ganz oder teilweise bestehen. Die Textilien können alle oder einige Arten von Materialien aus miteinander verflochtenen Fasern umfassen. Die Textilien können verschiedene Materialien, insbesondere Baumwolle, Wolle, Kaschmir, Leinen, Naturseide, Viskose, Mikrofasern, Kunststoffe, Chemiefasern (insbesondere Polyester, Polyamid, Polyacryl, Elasthan und/oder Nylon) und/oder Metallseide umfassen. Das Geschirr kann die Materialien Porzellan, Keramik, Glas, Edelstahl, und/oder Kunststoff (insbesondere Melamin, Polypropylen, Resylin und/oder Styrol-Acrylnitril) umfassen. Die Menge an abgeriebenem Material pro Behandlungsvorgang, in anderen Worten die Menge an Flusen, und damit die zu filternde Partikelfracht, ist für unterschiedliche Materialien unterschiedlich hoch. Bei Baumwoll-Textilien entsteht beispielsweise eine geringere Partikelfracht pro Behandlungsvorgang als für Mikrofaser-Textilien. Das Erlangen von Informationen über die Beschaffenheit der zu behandelnden Artikel hat den Vorteil, dass damit sehr genau die zu filternde Partikelfracht bestimmt werden kann und/oder der Zustand des Filters mit hoher Genauigkeit ermittelt werden kann.

Die Informationen über d), nämlich die Beschaffenheit des zur Verfügung stehenden Behandlungsmediums, können Informationen über die Art des Behandlungsmediums und/oder Inhaltsstoffe des Behandlungsmediums umfassen. Das Behandlungsmedium kann Wasser, insbesondere Leitungswasser, umfassen. Ferner kann das Behandlungsmedium Luft umfassen. Das Behandlungsmedium kann Inhaltsstoffe, insbesondere Mineralien und/oder Verbindungen, welche Mineralien aufweisen, umfassen. Das Behandlungsmedium kann gelöstes Calciumhydrogencarbonat (Ca(HCO₃)₂ aufweisen. Das Calciumhydrogencarbonat kann zu einer Ausfällung von Calciumcarbonat (CaCO₃), einem in Wasser unlöslichen Feststoff, welcher als Kalk bezeichnet wird, führen. Die Ausfällung von Calciumcarbonat kann zu einer Bildung von Kalkablagerungen führen. Die Kalkablagerungen können Partikel sein. Die Kalkablagerungen können sich in dem Filter des wasserführenden Haushaltsgeräts bilden. Das Behandlungsmedium kann verschiedene Härtegrade aufweisen. Informationen über den Härtegrad können basierend auf der Konzentration der Calciumverbindungen und/oder Magnesiumverbindungen in dem Behandlungsmedium erlangt werden. Gemäß des Wasch- und Reinigungsmittelgesetzes (WRMG, 1.2.2007) entspricht eine Konzentration von kleiner als 1,5 Millimol Calciumcarbonat pro Liter (mmol/l) dem Härtegrad "weich". Eine Konzentration von 1,5 bis 2,5 mmol/I Calciumcarbonat entspricht dem Härtegrad "mittel". Eine Konzentration von mehr als 2,5 mmol/I Calciumcarbonat entspricht dem Härtegrad "hart". Ein Behandlungsmedium eines höheren Härtegrades kann zu einer stärkeren Kalkablagerung führen als ein Behandlungsmedium eines niedrigeren Härtegrades. In anderen Worten bewirkt hartes Behandlungsmedium, dass eine höhere Masse und/oder ein höheres Volumen an Kalk ausfällt als bei weichem Behandlungsmedium. Die erhöhte Kalkablagerung kann dazu führen, dass der Filter des wasserführenden Haushaltsgeräts früher und/oder öfter gereinigt und/oder ausgetauscht werden muss. Das Erlangen von Informationen über den Härtegrad des Behandlungsmediums ermöglicht, dass damit Informationen darüber erlangt werden können, welche Menge, welche Masse und/oder welches Volumen an Kalk in Kontakt mit dem Filter gelangt. Ein Erlangen von Informationen über den Härtegrad des Behandlungsmediums hat den Vorteil, dass der Zustand des Filters mit hoher Genauigkeit ermittelt werden kann. Ferner werden bei höheren Härtegraden des Behandlungsmediums im Durchschnitt höhere Mengen an Behandlungsmittel benötigt. Beispielsweise kann bei weichem Behandlungsmedium auf Weichspüler verzichtet werden. Das Erlangen von Informationen über die Beschaffenheit des Behandlungsmediums ermöglicht, Informationen über das verwendete Behandlungsmittel, insbesondere über die Menge an verwendeten Behandlungsmittel, zu erlangen. Das verwendete Behandlungsmittel kann ausfallen, zu der zu filternden Partikelfracht beitragen und/oder sich in dem Filter ablagern. Das Erlangen von Informationen über die Menge an verwendeten Behandlungsmittel hat den Vorteil, dass der Zustand des Filters mit hoher Genauigkeit ermittelt werden kann.

Die Informationen über e), nämlich die Beschaffenheit des einen oder der mehreren Behandlungsmittels, können Informationen über die Art, die chemische Zusammensetzung und/oder die Konsistenz des Behandlungsmittels umfassen. Das Behandlungsmittels kann ein Wäschebehandlungsmittel und/oder ein Spülmittel umfassen. Die Art des Behandlungsmittels kann Waschmittel, Vollwaschmittel, Buntwaschmittel, Feinwaschmittel, Spezialwaschmittel, Weichspüler, Bleichmittel, Spülmittel und/oder Klarspüler umfassen. Je nach Beschaffenheit der zu behandelnden Artikel können verschiedene Behandlungsmittel verwendet werden. Basierend auf den Informationen über die Art des Behandlungsmittels können Informationen über die Beschaffenheit der zu behandelnden Artikel und/oder über die Dosierung des Behandlungsmittels erlangt werden. Beispielsweise sollte Funktionskleidung und/oder Sportkleidung, welche Mikrofaser umfasst, nicht mit Weichspüler gewaschen werden. Ferner kann basierend auf der Information darüber, dass auf Weichspüler verzichtet wurde und/oder ein Spezialwaschmittel für Sportkleidung und/oder Funktionskleidung verwendet wurde, die Information erlangt werden, dass die zu behandelnden Artikel Mikrofasern umfassen. Die Mikrofasern können im Vergleich zu anderen Materialien besonders stark zu der zu filternden Partikelfracht beitragen, in anderen Worten die Menge an zu filternden Partikeln erhöhen.

Die chemische Zusammensetzung kann die Bestandteile des Behandlungsmittels und/oder deren Mengenanteile umfassen. Die Bestandteile des Behandlungsmittels können Tenside, Wasserenthärter, Waschalkalien, Enzyme und/oder Duftstoffe umfassen.

Die unterschiedlichen Bestandteile können unterschiedlich stark zu der zu filternden Partikelfracht beitragen. Die Tenside und/oder Waschalkalien können ausfallen, zu der zu filternden Partikelfracht beitragen und/oder sich in dem Filter ablagern. Die Wasserenthärter können den Härtegrad des Behandlungsmediums senken und Kalkablagerungen in dem Filter reduzieren. Die Konsistenz des Behandlungsmittels kann fest, flüssig und/oder gelartig sein. Die festen Behandlungsmittel können unvollständig in dem Behandlungsmittel gelöst sein und/oder ausfallen, zu der zu filternden Partikelfracht beitragen und/oder sich im Filter ablagern. Die gelartigen und/oder flüssigen Behandlungsmittel können zu einer niedrigeren Partikelfracht führen als die festen Behandlungsmittel. Das Erlangen von Informationen über die Beschaffenheit des einen oder der mehreren Behandlungsmittel, insbesondere das Erlangen von Informationen über die Art und/oder chemische Zusammensetzung des Behandlungsmittels und/oder die Beschaffenheit der zu behandelnden Artikel ermöglicht ein Erlangen von Informationen über die Menge an zu filternden Partikeln. Das Erlangen von Informationen über die Beschaffenheit des einen oder der mehreren Behandlungsmittel hat den Vorteil, dass basierend auf diesen Informationen der Zustand des Filters mit hoher Genauigkeit ermittelt werden kann.

Die Informationen über f), nämlich die Art eines Behandlungsvorgangs, können vier Grundparameter des Sinnerschen-Kreises umfassen. Diese Grundparameter können Mechanik, Chemie, Zeit und/oder Temperatur sein. Der Grundparameter Mechanik kann die Drehzahl und/oder Drehbewegung einer Trommel der Behandlungskammer umfassen. Der Grundparameter Chemie kann die Art des Behandlungsmittels oder der Behandlungsmittel, die Beschaffenheit des Behandlungsmediums und/oder die Beschaffenheit der zu behandelnden Artikel umfassen. Der Grundparameter Zeit kann die Dauer des Behandlungsvorgangs umfassen. Der Grundparameter Temperatur kann die Temperatur des Behandlungsmediums umfassen. Die Art eines Behandlungsvorgangs kann die Optionen Schonwaschgang, Buntwaschgang, Feinwaschgang, energiesparender Öko-Waschgang, Kochwäsche, Wollwaschgang und/oder Waschgang für pflegeleichte Textilien umfassen. Die Art des Behandlungsvorgangs kann ferner die Optionen Vorspülgang, Hauptspülgang und/oder Klarspülwaschgang umfassen. Die Art des Behandlungsvorgangs kann die Dauer des Behandlungsvorgangs, die Temperatur des Behandlungsmediums und/oder die Drehzahl der Trommel der Behandlungskammer des wasserführenden Haushaltsgeräts umfassen. Basierend auf den Informationen über die Art des Behandlungsvorgangs können Informationen über die Dauer des Behandlungsvorgangs, die Temperatur des Behandlungsmediums und/oder die Drehzahl der Trommel der Behandlungskammer des wasserführenden Haushaltsgeräts erlangt werden. Bei einer längeren Dauer des Behandlungsvorgangs kann eine stärkere mechanische Belastung der zu behandelnden Artikel entstehen. In anderen Worten kann ein stärkerer Abrieb der zu behandelnden Artikel und eine höhere Partikelfracht entstehen. Bei einer höheren Temperatur kann die Löslichkeit schwerlöslicher Substanzen, insbesondere des Kalks und/oder des festen Behandlungsmittels erhöht und die zu filternde Partikelfracht reduziert werden. Die Behandlungskammer kann dazu ausgestaltet sein, die zu behandelnden Artikel aufzunehmen. Die Behandlungskammer kann eine Waschtrommel und/oder eine Trocknertrommel umfassen. Bei einer höheren Drehzahl kann eine höhere mechanische Belastung der zu behandelnden Artikel, insbesondere eine höhere Reibung und/oder ein höherer Abrieb der zu behandelnden Artikel auftreten und die Partikelfracht erhöht werden. Basierend auf den Informationen über die Art des Behandlungsvorgangs kann die Partikelfracht genau bestimmt werden. Das Erlangen von Informationen über die Art des Behandlungsvorgangs hat den Vorteil, dass der Abrieb .

Die Informationen über g), nämlich die Trübung des Fluids, können die Informationen über die Konzentration der Trübstoffe in dem Fluid umfassen. Die Trübung kann optische Trübung sein. Die optische Trübung kann durch eine Lichtbrechung und/oder Absorption an den Trübstoffen in dem Fluid hervorgerufen werden. Die Lichtbrechung kann erfolgen, wenn die Trübstoffe einen anderen Brechungsindex aufweisen als das Fluid. Die Trübstoffe können in Wasser lösliche, schwerlösliche und/oder unlösliche Substanzen umfassen. Die Trübstoffe können das Behandlungsmittel und/oder die Partikel umfassen. Mit anderen Worten kann die Trübung auch einer Menge von Partikeln in dem Fluid basieren. Basierend auf der Stärke (in anderen Worten: Intensität) der Trübung kann die Konzentration der zu filternden Partikel und/oder die zu filternde Partikelfracht bestimmt werden. Eine höhere Konzentration der Trübstoffe kann die Trübung des Fluids durch Lichtbrechung und/oder Absorption von Licht verstärken. In anderen Worten kann eine starke optische Trübung auf eine hohe Konzentration von Partikeln und/oder eine hohe zu filternde Partikelfracht hinweisen. Eine schwache optische Trübung oder eine Abwesenheit einer optischen Trübung kann auf eine niedrige Partikelfracht hinweisen. Die Trübung des Fluids kann stromaufwärts und/oder stromabwärts der Behandlungskammer gemessen werden. Das Erlangen von Informationen über die Trübung des Fluids hat den Vorteil, dass die zu filternde Partikelfracht genau bestimmt und/oder der Zustand des Filters mit hoher Genauigkeit ermittelt werden kann.

Die Informationen über d), nämlich die Wassermenge, kann dazu verwendet werden ein sogenanntes Flottenverhältnis zu bestimmen. Das Flottenverhältnis ist das Verhältnis von Wäschemenge zum Wasservolumen in einer Waschmaschine. Das Flottenverhältnis hat einen maßgeblichen Einfluss auf die Partikelabgabe der Wäsche.

Gemäß einer Ausführungsform können die Informationen über a), nämlich die Anzahl von Behandlungsvorgängen, von einer Zähleinheit und/oder von einer Datenbank erlangt werden. Die Zähleinheit kann dazu ausgestaltet sein, die Anzahl von Behandlungsvorgängen zu zählen. Die Zähleinheit kann eine manuelle Zähleinheit umfassen, die dazu ausgestaltet ist, dass ein Nutzer vor oder nach dem Behandlungsvorgang einen Schalter und/oder einen Knopf betätigen kann, um den aktuell auszuführenden oder ausgeführten Behandlungsvorgang zu der Anzahl von vorherigen Behandlungsvorgängen zu addieren. Ferner kann die Zähleinheit eine automatische Zähleinheit sein. Die automatische Zähleinheit kann dazu ausgestaltet sein, den Behandlungsvorgang automatisch zu der Anzahl von vorherigen Behandlungsvorgängen zu addieren. Eine automatische Zähleinheit kann dazu ausgestaltet sein, dass der Behandlungsvorgang zu der Anzahl von vorherigen Behandlungsvorgängen addiert wird, sobald die Zähleinheit von dem wasserführenden Haushaltsgerät und/oder dem Nutzer die Information erhält, dass der Behandlungsvorgang beginnt oder endet. Alternativ oder zusätzlich kann die Information über die Anzahl von Behandlungsvorgängen von einer Datenbank erlangt werden. Die Datenbank kann eine organisierte Sammlung von strukturierten Informationen umfassen. Die Datenbank kann dazu ausgestaltet sein, von einem Datenbankverwaltungssystem gesteuert zu werden. Die Datenbank kann eine Open-Source Datenbank, eine Cloud Datenbank und/oder eine multimodale Datenbank umfassen. Das Datenbankverwaltungssystem kann dazu ausgestaltet sein, einen Behandlungsvorgang zu der Anzahl von vorherigen Behandlungsvorgängen zu addieren, sobald die Zähleinheit von dem wasserführenden Haushaltsgerät und/oder dem Nutzer die Information erhält, dass der Behandlungsvorgang beginnt oder endet. Das Erlangen der Informationen über die Anzahl von Behandlungsvorgängen von der Zähleinheit und/oder Datenbank hat den Vorteil, dass die Information über die Anzahl von Behandlungsvorgängen zuverlässig und effizient erlangt werden kann.

Gemäß einer weiteren Ausführungsform kann die Zähleinheit dazu ausgestaltet sein, die Anzahl von Behandlungsvorgängen seit dem letzten Filterwechsel und/oder der letzten Filterreinigung zu zählen. Die Zähleinheit kann dazu ausgestaltet sein, die Anzahl von Behandlungsvorgängen nach jedem Filterwechsel und/oder jeder Filterreinigung auf null zu setzen. In anderen Worten kann die Zähleinheit dazu ausgestaltet sein, nach jedem Filterwechsel und/oder jeder Filterreinigung die Daten und/oder Informationen bezüglich der Anzahl von erfolgten Behandlungsgängen zu löschen und den ersten Behandlungsvorgang nach dem Filterwechsel und/oder der Filterreinigung als ersten Behandlungsvorgang und/oder Behandlungsvorgang Nummer 1 zu zählen. Die Zähleinheit kann dazu ausgestaltet sein, dass das Rücksetzen der Anzahl von Behandlungsvorgängen auf null manuell durch Betätigung eines Schalters und/oder Knopfes durch den Nutzer und/oder automatisch erfolgen kann. Die Zähleinheit kann ferner dazu ausgestaltet sein, von einem Sensor in dem wasserführenden Haushaltsgerät die Information zu erhalten, dass eine Entnahme des Filters zur Reinigung und/oder zum Wechsel durch den Nutzer stattgefunden hat. Das Erlangen der Informationen über die Anzahl von Behandlungsvorgängen seit dem letzten Filterwechsel und/oder der letzten Filterreinigung durch die Zähleinheit hat den Vorteil, dass basierend auf diesen Betriebsinformationen der Zustand des Filters sehr effizient, einfach und mit hoher Genauigkeit ermittelt werden kann.

Gemäß einer Ausführungsform können die Informationen über b), nämlich die Beladung des wasserführenden Haushaltsgeräts, basierend auf den gravimetrischen Daten des wasserführenden Haushaltsgeräts, dem Saugverhalten der Artikel und/oder dem Flüssigkeitsabgabeverhalten der Artikel bestimmt werden. Die Informationen über die gravimetrischen Daten können mittels einem oder mehreren Sensoren erlangt werden. Die Sensoren können gravimetrische Sensoren, beispielsweise Dämpfer, und/oder Beschleunigungssensoren (3G Sensoren) umfassen. Der mindestens eine Sensor kann dazu ausgestaltet sein, die Masse der zu behandelnden Artikel beim Beladen der Behandlungskammer des wasserführenden Haushaltsgeräts zu bestimmen. Der mindestens eine Sensor kann ferner dazu ausgestaltet sein, Informationen über die Masse der zu behandelnden Artikel basierend auf deren Gravitationskraft zu erlangen. Ferner kann der Sensor dazu ausgestaltet sein, Beschleunigungskräfte, welche auf die Behandlungskammer wirken, zu bestimmen. In anderen Worten kann der Sensor dazu ausgestaltet sein, die Beschleunigungskräfte während der Rotation, in anderen Worten dem Schleudern der Behandlungskammer, zu bestimmen. Der Sensor kann dazu ausgestaltet sein, die Masse der Behandlungskammer basierend auf den Beschleunigungskräften zu bestimmen. Der Sensor kann dazu ausgestaltet sein, die Masse der zu behandelnden Artikel basierend auf einer Differenz der Masse der Behandlungskammer und der Masse des Behandlungsmediums zu bestimmen. Der Sensor kann dazu ausgestaltet sein, die Beladung des wasserführenden Haushaltsgeräts basierend auf dem Saugverhalten der zu behandelnden Artikel zu bestimmen, in anderen Worten das Flüssigkeitsaufnahmeverhalten der Artikel zu bestimmen. Der Sensor kann dazu ausgestaltet sein, die Masse und/oder das Volumen der zu behandelnden Artikel zu bestimmen. Der Sensor kann einen gravimetrischen Sensor und/oder einen optischen Sensor umfassen.

Ferner kann der Sensor dazu ausgestaltet sein, das Flüssigkeitsabgabeverhalten der zu behandelnden Artikel basierend auf einer Differenz der Masse der zu behandelnden Artikel vor und nach der Rotation der Behandlungskammer, in anderen Worten vor oder nach einem Schleudergang, zu bestimmen. Die von den zu behandelnden Artikeln abgegebene Flüssigkeit kann das Behandlungsmedium und/oder das Behandlungsmittel umfassen. Der Sensor kann dazu ausgestaltet sein, die Beladung des wasserführenden Haushaltsgeräts basierend auf dem Flüssigkeitsabgabeverhalten der zu behandelnden Artikel zu bestimmen. Ferner kann der Sensor dazu ausgestaltet sein, das Saugverhalten der zu behandelnden Artikel basierend auf einer Differenz der Masse der zu behandelnden Artikel nach und vor Kontakt mit dem Behandlungsmedium zu bestimmen. Die Masse und/oder das Volumen des Behandlungsmediums kann mittels Volumenstromsensoren, basierend auf abgespeicherten Daten und/oder basierend auf Nutzereingaben bestimmt werden. Ferner können die Informationen über die Masse und/oder das Volumen des Behandlungsmediums mittels eines oder mehrerer Drucksensoren bestimmt werden. Der mindestens eine Drucksensor kann dazu ausgestaltet sein, die Informationen über das Volumen des in der Behandlungskammer befindlichen Fluids, das Saugverhalten und/oder Flüssigkeitsabgabeverhalten der zu behandelnden Artikel basierend auf einem Druck einer Luftsäule zu bestimmen. Eine Luftsäule kann eine in einem zylinder- oder röhrenförmigen Behälter oder Kolben enthaltene Luftmenge sein. Die Luftmenge kann das Volumen und/oder die Masse der Luft umfassen. Der Druck der Luftsäule kann durch eine Kompression der in dem Behälter oder Kolben befindlichen Luft erhöht werden. Die Erhöhung oder Senkung des Volumens des in der Behandlungskammer befindlichen Fluids (d.h. der Füllstand der Behandlungskammer) kann den Druck der Luftsäule erhöhen oder senken. Der Druck der Luftsäule kann sich in der Frequenz des Reversierens ändern. In anderen Worten kann sich das Signal des Drucksensors ändern, wenn sich die Drehrichtung der Behandlungskammer ändert. Anders ausgedrückt kann sich die Amplitude (in anderen Worten die Auslenkung oder die Intensität) des Signals des Drucksensors mit der Zeit ändern. Ferner können sich die Turbulenzen des Fluids in der Behandlungskammer ändern. Die Änderung der Turbulenzen des Fluids kann eine Fluktuation und/oder eine Schwankung des Drucks der Luftsäule bewirken. Die Änderung des Drucks der Luftsäule kann das Signals des Drucksensors zeitlich ändern. Die zeitliche Änderung des Signals des Drucksensors kann periodisch sein. Die zeitliche Änderung der Amplitude kann in der Frequenz der Änderung der Drehrichtung der Behandlungskammer erfolgen. Die Drehrichtung der Behandlungskammer, in anderen Worten der Umlaufsinn der Behandlungskammer, kann eine Rotationsbewegung im Uhrzeigersinn und/oder gegen den Uhrzeigersinn umfassen. Basierend auf den Informationen über die Änderung des Drucks der Luftsäule können Informationen über die Beladung erlangt und/oder das Saugverhalten und/oder das Flüssigkeitsabgabeverhalten der Artikel bestimmt werden. Ferner können die gravimetrischen Daten Informationen, welche mittels einer Motorload-Detektion erlangt werden, umfassen. Die Motorload-Detektion kann dazu ausgestaltet sein, Informationen über die Beladung der Behandlungskammer mit zu behandelnden Artikeln basierend auf dem von einem Motor aufgenommen Strom zu erlangen. Der Motor kann dazu ausgestaltet sein, die Behandlungskammer in rotatorische Bewegung zu versetzen. In anderen Worten kann der Motor dazu ausgestaltet sein, die Behandlungskammer in eine Drehbewegung mit einer vorgegebenen Drehzahl zu versetzen. Basierend auf den Informationen über die Stromaufnahme des Motors können Informationen über die Beladung erlangt werden. Aufgrund der Trägheit der zu behandelnden Artikel bedeutet eine höhere Stromaufnahme des Motors eine höhere Beladung. Das Bestimmen der Beladung des wasserführenden Haushaltsgeräts basierend auf den gravimetrischen Daten des wasserführenden Haushaltsgeräts hat den Vorteil, dass Informationen über die Beladung des wasserführenden Haushaltsgeräts mittels bereits im wasserführenden Haushaltsgerät vorhandenen Sensoren erlangt werden können und der Zustand des Filters schnell und mit hoher Genauigkeit ermittelt werden kann.

Gemäß einer Ausführungsform wird die Information über c), nämlich die Beschaffenheit der zu behandelnden Artikel, basierend auf dem Saugverhalten der Artikel, dem Flüssigkeitsabgabeverhalten der Artikel und/oder der Art des Behandlungsvorgangs bestimmt. Die Informationen über die Beschaffenheit der zu behandelnden Artikel können mittels einem oder mehrerer Sensoren erhalten werden. Die Sensoren können dazu ausgestaltet sein, das Saugverhalten und/oder das Flüssigkeitsabgabeverhalten der Artikel zu bestimmen. Die Sensoren können dazu ausgestaltet sein, die Beschaffenheit der Artikel basierend auf dem Saugverhalten und/oder dem Flüssigkeitsabgabeverhalten der Artikel zu bestimmen. Beispielsweise können Baumwolltextilien ein höheres Saugverhalten und/oder Flüssigkeitsabgabeverhalten aufweisen als Mikrofasertextilien. Die Sensoren können dazu ausgestaltet sein, die Beschaffenheit der Artikel basierend auf dem Saugverhalten und/oder dem Flüssigkeitsabgabeverhalten der Artikel zu bestimmen. Das Bestimmen der Beschaffenheit der zu behandelnden Artikel basierend auf dem Saugverhalten und/oder dem Flüssigkeitsabgabeverhalten hat den Vorteil, dass Informationen über die Beschaffenheit der Artikel mittels bereits im wasserführenden Haushaltsgerät vorhandenen Sensoren erlangt werden können und der Zustand des Filters schnell und mit hoher Genauigkeit ermittelt werden kann. Die Information über die Beschaffenheit der zu behandelnden Artikel können ferner basierend auf der Art des Behandlungsvorgangs erlangt werden. Beispielsweise kann basierend auf der Information, dass ein Wollwaschgang ausgewählt wurde, die Information erlangt werden, dass die zu behandelnden Artikel Wolle umfassen. Ferner kann basierend auf der Information, dass ein zusätzlicher und/oder längerer Behandlungsvorgang ausgewählt wurde, die Information erlangt werden, dass die zu filternde Partikelfracht erhöht sein kann. Basierend auf der Information, dass ein Behandlungsprogramm mit kurzer Dauer (z.B. "Speed Perfect") ausgewählt wurde, kann die Information erlangt werden, dass eine höhere mechanische Belastung und/oder eine höhere Temperatur auf die zu behandelnden Artikel einwirkt und eine höhere Partikelfracht vorliegt. Basierend auf der Information, dass ein ökologisches Behandlungsprogramm (z.B. "Eco Perfect") ausgewählt wurde, kann die Information erlangt werden, dass eine geringere mechanische Belastung der zu behandelnden Artikel und/oder eine niedrigere Temperatur des Behandlungsmediums vorliegen kann. Die niedrigere mechanische Belastung und/oder niedrigere Temperatur des Behandlungsmediums kann einen geringeren Abrieb der zu behandelnden Artikel und eine niedrigere Partikelfracht bewirken. Das Bestimmen der Beschaffenheit der Artikel mittels bereits im wasserführenden Haushaltsgerät vorhandenen Sensoren hat den Vorteil, dass der Zustand des Filters schnell und mit hoher Genauigkeit ermittelt werden kann.

Gemäß einer weiteren Ausführungsform können die Informationen über d), nämlich die Beschaffenheit des zur Verfügung stehenden Behandlungsmediums, basierend auf der Nutzereingabe und/oder den abgespeicherten Daten bestimmt werden. Die Nutzereingabe kann Informationen über den Härtegrad des Behandlungsmediums umfassen. Die Informationen über den Härtegrad können einen konkreten Zahlenwert für den Härtegrad und/oder Informationen über eine Kategorie des Härtegrads umfassen. Die Kategorie des Härtegrads kann "weich", "mittel" und "hart" umfassen. Die Nutzereingabe kann Informationen über den Standort des wasserführenden Haushaltsgeräts umfassen. Beispielsweise können die Informationen über den Standort des wasserführenden Haushaltsgeräts die Postleitzahl, die Koordinaten und/oder den Wohnort des Nutzers umfassen. Die Informationen über die Beschaffenheit des Behandlungsmediums können basierend auf den Informationen über den Standort erlangt werden. Ferner kann die Beschaffenheit des zur Verfügung stehenden Behandlungsmediums basierend auf abgespeicherten Daten bestimmt werden. Die abgespeicherten Daten können auf einem Speicherchip des wasserführenden Haushaltsgeräts und/oder in einer Datenbank gespeichert werden. Der Zustand des Filters kann basierend auf dem Härtegrad des Behandlungsmediums ermittelt werden. Ferner können basierend auf den Informationen über den Härtegrad des Behandlungsmediums Informationen über die verwendete Menge und/oder Art des Behandlungsmittels erlangt werden. Bei niedrigeren Härtegraden des Behandlungsmediums kann eine geringere Menge an Behandlungsmittel verwendet und auf Weichspüler verzichtet werden. Basierend auf den Informationen über die Menge des verwendeten Behandlungsmittels kann die Partikelfracht bestimmt und/oder der Zustand des Filters ermittelt werden. Die Nutzereingabe kann ferner Informationen über die Art des Behandlungsvorgangs umfassen. Basierend auf den Informationen über die Art des Behandlungsvorgangs können Informationen über die verwendete Menge an Behandlungsfluid und/oder den Verschmutzungsgrad der zu behandelnden Artikel erlangt werden. Basierend auf den Informationen über die verwendete Menge an Behandlungsfluid und/oder den Verschmutzungsgrad der zu behandelnden Artikel können Informationen über die zu filternde Partikelfracht erlangt werden. Das Bestimmen der Beschaffenheit des zur Verfügung stehenden Behandlungsmediums basierend auf den Nutzereingaben und/oder den abgespeicherten Daten hat den Vorteil, dass diese Informationen ohne zusätzliche Sensoren erlangt werden können und der Zustand des Filters mit hoher Genauigkeit ermittelt werden kann.

Gemäß einer weiteren Ausführungsform können die Informationen über e), nämlich die Beschaffenheit des einen oder der mehreren Behandlungsmittel, basierend auf der Nutzereingabe und/oder den abgespeicherten Daten bestimmt werden. Die Nutzereingabe kann Informationen über die Art und/oder die Beschaffenheit des mindestens einen Behandlungsmittels umfassen. Ferner kann die Beschaffenheit des zur Verfügung stehenden Behandlungsmittels basierend auf den abgespeicherten Daten bestimmt werden. Die abgespeicherten Daten können auf einem Speicherchip des wasserführenden Haushaltsgeräts und/oder in einer Datenbank gespeichert werden. Der Zustand des Filters kann basierend auf der Beschaffenheit des Behandlungsmittels ermittelt werden. Ferner kann die Nutzereingabe und/oder die abgespeicherten Daten die Masse und/oder das Volumen des Behandlungsmittels umfassen. Basierend auf den Informationen über die Beschaffenheit und/oder Menge des verwendeten Behandlungsmittels kann die Partikelfracht bestimmt und/oder der Zustand des Filters, insbesondere die Behandlungsmittelrückstände und/oder die Behandlungsmittelablagerungen in dem Filter, ermittelt werden. Das Bestimmen der Beschaffenheit des Behandlungsmittels basierend auf den Nutzereingaben und/oder den abgespeicherten Daten hat den Vorteil, dass diese Informationen ohne zusätzliche Sensoren erlangt werden können und der Zustand des Filters mit hoher Genauigkeit ermittelt werden kann.

Gemäß einer Ausführungsform können die Informationen über f), nämlich die Art des Behandlungsvorgangs, basierend auf der Dauer des Behandlungsvorgangs, der Menge des zu verwendenden Behandlungsmittels, der Behandlungstemperatur und/oder der mechanischen Belastung der zu behandelnden Artikel während des Behandlungsvorgangs bestimmt werden. Die Informationen über die Dauer des Behandlungsvorgangs können mittels Sensoren und/oder Zeitermittlungsvorrichtungen, insbesondere Uhren, erlangt werden. Die Informationen über die Menge des zu verwendenden Behandlungsmittels können mittels Sensoren, insbesondere mittels gravimetrischen Sensoren, erlangt werden. Die Behandlungstemperatur kann die Temperatur des Behandlungsmediums sein. Die Informationen über die Behandlungstemperatur können mittels Sensoren und/oder Thermometer erlangt werden. Die Informationen über die mechanische Belastung der zu behandelnden Artikel während des Behandlungsvorgangs können mittels Sensoren und/oder basierend auf Informationen über die Drehzahl der Trommel der Behandlungskammer erlangt werden. Die Art des Behandlungsvorgangs kann basierend auf den von dem Nutzer ausgewählten Optionen bestimmt werden. Die von einem Nutzer ausgewählten Optionen können die Informationen über die Beschaffenheit und/oder Menge der zu behandelnden Artikel, die Beschaffenheit und/oder Menge des Behandlungsmediums, die Beschaffenheit und/oder Menge und/oder Anzahl von verwendeten Behandlungsmitteln, die Art des Behandlungsvorgangs, die Dauer des Behandlungsvorgangs, die Drehzahl der Trommel der Behandlungskammer und/oder die Behandlungstemperatur umfassen. Das Bestimmen der Art des Behandlungsvorgangs basierend auf der Dauer des Behandlungsvorgangs, der Menge des zu verwendenden Behandlungsmittels, der Behandlungstemperatur, der mechanischen Belastung der Artikel während des Behandlungsvorgangs und/oder basierend auf den Nutzereingaben hat den Vorteil, dass die Betriebsinformationen mit bereits vorhandenen oder wenigen zusätzlichen Sensoren individuell für jeden Nutzer und/oder für jeden Behandlungsvorgang erlangt werden können und der Zustand des Filters basierend auf diesen Betriebsinformationen mit sehr hoher Genauigkeit ermittelt werden kann.

Gemäß einer Ausführungsform können die Informationen über g), nämlich die Trübung des Fluids, basierend auf Daten des Trübungssensors bestimmt werden. Der Trübungssensor kann ein optischer Sensor sein. Der Trübungssensor kann dazu ausgestaltet sein, die Lichtbrechung und/oder Absorption von Licht in dem Fluid zu bestimmen. Das Licht kann Infrarotlicht, Weißlicht und/oder ultraviolettes Licht umfassen. Das Erlangen von Informationen über die Trübung des Fluids basierend auf Daten des Trübungssensors hat den Vorteil, dass die zu filternde Partikelfracht mit hoher Genauigkeit bestimmt und der Zustand des Filters mit hoher Genauigkeit ermittelt werden kann. Ferner sind keine Nutzereingaben erforderlich, wodurch fehlerhafte Eingaben und/oder das Unterlassen von benötigten Eingaben durch den Nutzer ausgeschlossen werden können und der Zustand des Filters fehlerfrei und mit hoher Genauigkeit ermittelt werden kann.

Gemäß einer Ausführungsform umfasst das Ermitteln des Zustands des Filters ein Bestimmen einer Filterfläche des Filters. Die Filterfläche kann die Fläche des Filters sein, welche dazu ausgestaltet ist, für das Fluid und/oder das Behandlungsmedium durchlässig zu sein. Die Filterfläche kann Poren umfassen. Die Poren des Filters können einen mittleren Durchmesser von 10-100 Mikrometer (µm), bevorzugt 30-100 µm, besonders bevorzugt 40-80 µm umfassen. Die Filterfläche kann ferner dazu ausgestaltet sein, Partikel, deren mittlerer Durchmesser größer ist als der mittlere Porendurchmesser, aus dem Fluid zu filtern. In anderen Worten ist die Filterfläche für Partikel, welche größer sind als die Poren des Filters, undurchlässig. Der Zustand des Filters kann von der Filterfläche abhängen. Bei einer größeren Filterfläche kann eine höhere Partikelfracht aufgenommen werden, bevor die maximale Aufnahmekapazität erreicht wird. Die Filterfläche kann basierend auf der Nutzereingabe und/oder den abgespeicherten Daten bestimmt werden. Die Filterfläche kann einen Durchmesser des Filters, eine Gesamtfilterfläche, eine effektive Filterfläche und/oder eine Marke des Filterherstellers umfassen. Das Bestimmen der Filterfläche basierend auf den Nutzereingaben und/oder abgespeicherten Daten hat den Vorteil, dass keine zusätzlichen Sensoren notwendig sind und der reale Filterzustand mit hoher Genauigkeit ermittelt werden kann.

Gemäß einer Ausführungsform wird der Zustand des Filters basierend auf dem hydraulischen Widerstand des Filters ermittelt. Der hydraulische Widerstand kann der Widerstand sein, welchem das Fluid und/oder das Behandlungsmedium ausgesetzt ist, wenn dieses durch die Filterfläche gelangt. In anderen Worten ist der hydraulische Widerstand ein Druckverlust, welcher auftritt, wenn das Fluid und/oder das Behandlungsmedium durch die Poren des Filters strömt. Je größer die Menge an abgeschiedenen, ausgefällten und/oder gefilterten Partikeln in dem Filter ist, desto höher ist der hydraulische Widerstand. Die Informationen über den hydraulischen Widerstand können mittels Sensoren, insbesondere Drucksensoren, erlangt werden. Die Informationen über den Zustand des Filters können basierend auf einer Differenz zwischen dem gemessenen hydraulischen Widerstand und dem hydraulischen Widerstand eines neuen oder frisch gereinigten Filters ermittelt werden. Das Ermitteln des Filterzustands basierend auf dem hydraulischen Widerstand des Filters hat den Vorteil, dass der reale Zustand des Filters einfach, schnell und mit hoher Genauigkeit ermittelt werden kann und keine Nutzereingaben erforderlich sind.

Die Ausgabe der Informationen kann mittels einer Anzeigeeinheit, beispielsweise mittels eines Displays (in anderen Worten: eines Bildschirms), und/oder akustisch, beispielsweise über einen Lautsprecher, erfolgen. Ferner kann die Ausgabe der Informationen über den Filterzustand mittels einer Datenbank und/oder einer elektronischen Übermittlung der Daten an den Nutzer erfolgen. Die elektronische Übermittlung kann eine Benachrichtigung des Nutzers per E-Mail, per SMS und/oder mittels einer Smartphone-App umfassen.

Gemäß einer Ausführungsform umfasst das Verfahren das Erlangen von mehreren verschiedenen Betriebsinformationen des wasserführenden Haushaltsgeräts und das Ermit teln des Filterzustands basierend auf den erlangten Betriebsinformationen. Das Verfahren kann Informationen über ein Nutzerverhalten basierend auf mehreren Behandlungsvorgängen umfassen. Die Informationen basierend auf dem Nutzerverhalten können Informationen von mindestens 3, bevorzugt mindestens 10 und besonders bevorzugt mindestens 30 Behandlungsvorgängen umfassen. Die Informationen über das Nutzerverhalten können mittels eines lernfähigen Systems erlangt, verarbeitet, gespeichert und/oder an eine Anzeigeeinheit übermittelt werden. Das lernfähige System kann mittels eines Software-Updates aktualisiert und/oder verbessert werden. Das lernfähige System kann eine künstliche Intelligenz umfassen. Das Verarbeiten der Informationen kann statistische Berechnungen, ein Berechnen eines Mittelwerts (in anderen Worten: eines Durchschnitts), eine Regressionsanalyse und/oder eine multidimensionale Regression umfassen. Ferner kann das Verarbeiten der Daten eine Extrapolation der Daten umfassen. Die Extrapolation der Daten kann eine Schätzung von zukünftigen Betriebsinformationen umfassen. In anderen Worten können basierend auf dem vergangenen Nutzerverhalten Informationen über das zukünftige Nutzerverhalten erlangt, die zukünftig zu filternde Partikelfracht bestimmt und/oder der zukünftige Zustand des Filters ermittelt werden. Das Erlangen der zukünftigen Betriebsinformationen, das Bestimmen einer zukünftigen Partikelfracht und/oder das Ermitteln eines zukünftigen Filterzustands kann basierend auf experimentellen Laborwerten, Versuchen und/oder Daten aus Simulationen erfolgen. Die Laborwerte und/oder Daten aus Simulationen können die Partikelfrachten und/oder die Filterzustände in Abhängigkeit von bestimmten Betriebsinformationen und/oder von einer Kombination mehrerer verschiedener Betriebsinformationen umfassen. Die Laborwerte und/oder Daten aus Simulationen können in einer Tabelle dargestellt und/oder gespeichert werden. Die Tabelle kann in dem wasserführenden Haushaltsgerät, beispielsweise auf einem Chip, und/oder in einer Datenbank gespeichert sein. Die Tabelle kann mittels eines Updates aktualisiert und/oder optimiert werden. Ferner kann die Verarbeitung der Daten mittels einer Komperatoreinheit durchgeführt werden. Die Komperatoreinheit kann dazu ausgestaltet sein, Spannungen zu vergleichen. Die Komperatoreinheit kann ferner dazu ausgestaltet sein, in binärer und/oder digitaler Form die Information auszugeben, welche der beiden Spannungen höher ist. Die Komperatoreinheit kann ferner dazu ausgestaltet sein, Betriebsinformationen mit abgespeicherten Daten, insbesondere mit Laborwerten und/oder Daten aus Simulationen, zu vergleichen. Die Komperatoreinheit kann dazu ausgestaltet sein, basierend auf dem Vergleich der Betriebsinformationen mit den abgespeicherten Daten, den Zustand des Filters zu ermitteln. Das Erlangen von mehreren verschiedenen Betriebsinformationen und/oder des Nutzerverhaltens hat den Vorteil, dass der Zustand des Filters mit höherer Genauigkeit ermittelt werden kann als durch bloßes Zählen der erfolgten Behandlungsvorgänge. Die hohe Genauigkeit der Ermittlung des Filterzustands ermöglicht, den Filter zum optimalen Zeitpunkt auszutauschen und/oder zu reinigen, die Filterlebensdauer zu erhöhen, Wartungsaufwand zu vermindern und Kosten zu sparen.

Gemäß einem weiteren Aspekt der vorliegenden Erfindung wird ein wasserführendes Haushaltsgerät bereitgestellt, umfassend einen Filter, welcher dazu ausgestaltet ist, Partikel aus einem Fluid zu filtern, eine Steuereinheit, welche dazu ausgestaltet ist, das Verfahren gemäß einem der vorhergehenden Ansprüche auszuführen, um den Zustand des Filters zu ermitteln, und eine Anzeigeeinheit, wobei die Steuereinheit ferner dazu ausgestaltet ist, den ermittelten Zustand des Filters an die Anzeigeeinheit zu übermitteln, und wobei die Anzeigeeinheit dazu ausgestaltet ist, den ermittelten Zustand des Filters von der Steuereinheit zu erlangen und den Zustand des Filters auszugeben. Der Zustand des Filters kann beispielsweise durch eine akustische Mitteilung ausgegebene werden. Somit kann der Nutzer besonders einfach über den Zustand des Filters informiert werden. Insbesondere kann es sich bei dem wasserführenden Haushaltsgerät um eine Waschmaschine oder einen Waschtrockner handeln. Vorteil des wasserführenden Haushaltsgeräts ist, dass der Zustand des Filters mit hoher Genauigkeit ermittelt werden kann und der Nutzer über den Zustand des Filters informiert werden kann, sodass der Nutzer zum optimalen Zeitpunkt den Filter reinigen und/oder wechseln kann. Dadurch kann ein unnötiger Filterwechsel und/oder eine unnötige Filterreinigung vermieden und sichergestellt werden, dass der Filter rechtzeitig gewechselt und/oder gereinigt wird.

Gemäß einer Ausführungsform umfasst das wasserführende Haushaltsgerät ein automatisches Dosiersystem, wobei das automatische Dosiersystem dazu ausgestaltet ist, ein Behandlungsmittel automatisch zu dosieren. Das Behandlungsmittel kann ein festes, flüssiges und/oder gelartiges Behandlungsmittel umfassen. Das automatische Dosiersystem kann dazu ausgestaltet sein, automatisch Informationen über die Beschaffenheit des Behandlungsmediums, die Beladung des wasserführenden Haushaltsgeräts, die Beschaffenheit der zu behandelnden Artikel und/oder den Verschmutzungsgrad der zu behandelnden Artikel zu bestimmen und basierend auf diesen Informationen das Behandlungsmittel und/oder Behandlungsmedium zu dosieren. Vorteil des wasserführenden Haushaltsgeräts mit automatischen Dosiersystem ist, dass Behandlungsmedium und/oder Behandlungsmittel eingespart werden kann, die Partikelfracht reduziert werden kann, der Filter seltener gewechselt und/oder gereinigt werden muss und die Lebensdauer des Filters erhöht wird.

Die Vorteile und Effekte, die im Zusammenhang mit dem Verfahren genannt wurden, gelten analog auch für das wasserführende Haushaltsgerät und andersherum. Einzelne Merkmale von verschiedenen Ausführungsformen können mit anderen Merkmalen oder anderen Ausführungsformen kombiniert werden und neue Ausführungsformen bilden. Die genannten Vorteile und Effekte der Merkmale gelten auch für die neuen Ausführungsformen.

Im Folgenden werden Ausführungsformen der vorliegenden Erfindung mit Bezug auf die beigefügten Figuren beschrieben.
- **Figur 1**: zeigt ein Fließdiagramm mit Verfahrensschritten zum Bestimmen eines Zustands eines Filters einer Waschmaschine.
- **Figur 2**: zeigt eine schematische Darstellung einer Waschmaschine mit einem Filter, einer Steuereinheit, einem Display und einer Waschtrommel.

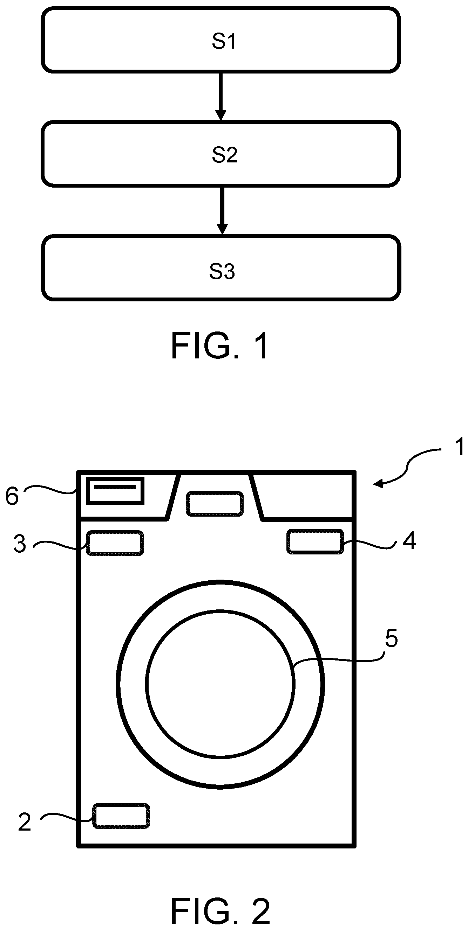

**Figur 1** zeigt ein Fließdiagramm mit aufeinanderfolgenden Verfahrensschritten zum Bestimmen des Zustands des Filters der Waschmaschine. Das Verfahren umfasst die folgenden Schritte:
- **Schritt S1:**: Erlangen von Betriebsinformationen der Waschmaschine;
- **Schritt S2:**: Bestimmen einer von dem Filter zu filternden Partikelfracht basierend auf den Betriebsinformationen;
- **Schritt S3:**: Ermitteln des Zustands des Filters basierend auf der Partikelfracht.

Die Betriebsinformationen umfassen Informationen über
a) die Anzahl von Waschzyklen;
b) die Beladung der Waschmaschine mit Textilien;
c) das Material der zu waschenden Textilien;
d) die Wasserhärte;
e) die Konsistenz des Waschmittels;
f) die Programm- und Optionswahl des Nutzers; und/oder
g) die Trübung der Waschlauge.

Gemäß einem Aspekt der vorliegenden Erfindung ist das wasserführende Haushaltsgerät eine Waschmaschine oder ein Wachtrockner. Dabei umfassen die Informationen über die Anzahl von Waschzyklen die Anzahl von bisher erfolgten Waschprogrammen. Die Waschmaschine ist dazu ausgestaltet, die bisher gelaufenen Waschprogramme zu zählen. Das Zählen der Waschzyklen kann beispielsweise in wasserführenden Haushaltgeräten eingeführt werden, um mit wenig Aufwand eine deutlich bessere Bewertung im Reparaturindex zu erhalten. Der Zähler würde aber nur die insgesamt gelaufenen Waschzyklen zählen. Zusätzlich kann gezählt werden, wie viele Zyklen seit dem letzten Filterwechsel vergangen sind. Diese Zählung kann beispielsweise über ein spezielles Filterwechsel-Programm gestartet werden. Die Anzahl von bisher erfolgten Waschzyklen ist ein wesentlicher Faktor für die Menge an angefallenem Faser-Material, Schmutz und Waschmittel (d.h. von Partikeln). Um ein möglichst aussagekräftiges Ergebnis zu erhalten wie der Zustand des Filter ist, können zusätzlich zur Anzahl von erfolgten Waschzyklen noch weitere Betriebsinformationen berücksichtigt werden.

Die Informationen über die Beladung der Waschmaschine mit Textilien können mittels Beladungs-Erkennung erlangt werden. Unter Textilien wird bevorzugt Wäsche (d.h. Kleidung) verstanden. Ganz-, Halb- und Viertelbeladungen können über das Saugverhalten erkannt werden. Mit Hilfe einer Motorload-Detektion steigt diese Erkennung auf ca. 250 g Genauigkeit an. Ist ein 3-G-Sensor an der Trommel verbaut, kann dieser in verschiedenen Situationen, beispielsweise beim Beladen oder Schleudern, genutzt werden. Beim Beladen der Waschmaschine (dazu muss die Waschmaschine zu diesem Zeitpunkt schon eingeschaltet sein) kann die nach unten gerichtete Kraft-Komponente direkt als Waage genutzt werden. Beim Schleudern der Wäsche in der Trommel der Waschmaschine kann anhand der auftretenden Beschleunigungskräfte näherungsweise auf die Masse in der beladenen Trommel geschlossen werden und bei bekanntem Wassergehalt auf die Beladung der Waschmaschine mit Wäsche geschlossen werden. Es können weitere gravimetrische Sensoren, z. B. im Dämpfer, genutzt werden, um die Beschleunigung und damit die Beladung zu erkennen. Die Beladungsmenge hat erheblichen Einfluss auf die anfallende Wassermenge und Faser-Menge, wobei dieser Einfluss nichtlinear ist. Bei sehr großen Beladungen wird mit viel Wasser gewaschen. Es werden aber pro kg Wäsche relativ wenige Fasern freigesetzt, da die Wäsche selbst wieder als Filter fungiert und die Mechanik am Textil geringer ausfällt. Bei sehr kleinen Beladungen wiederum kann grundsätzlich nur wenig Fasermaterial freigesetzt werden, da nur wenig Wäsche zur Verfügung steht. Das Maximum an freigesetzten Fasern wird für mittlere Beladungen angenommen.

Die Informationen über das Material der zu waschenden Textilien können basierend auf dem Saugverhalten der Textilien der Wäsche erlangt werden. Materialart-Erkennung kann erfolgen, indem aus dem Saugverhalten der Wäsche auf das Material geschlossen wird. Hierzu kann der Wasserzulauf (über einen Volumenstromzähler im Einlassventil) und der Druck (über den Drucksensor, der den Füllstand der freien Waschlauge erkennt) gemessen werden. Je nach Material(-anteil) der Wäsche unterscheiden sich die Signale. Baumwolle saugt viel Wasser auf. Also ist bei gleicher Menge an eingelaufenem Wasser der Druck des Fluids in der Behandlungskammer geringer. Kunstfasern (d.h. Chemiefasern) saugen fast kein Wasser auf, also ist bei gleicher Menge an eingelaufenem Wasser der Druck des Fluids höher. Außerdem kann während des Schleuderns und Abpumpens die Veränderung des Signals des Drucksensors gemessen werden. Baumwolle gibt bei gleicher Drehzahl mehr Wasser frei, Kunstfasern weniger. Verschiedene Fasermaterialien (hier werden rein exemplarisch die am häufigsten verwendeten Fasermaterialien, nämlich Baumwolle und Kunstfasern dargestellt) bewirken bei sonst gleichen Umgebungsbedingungen einen unterschiedlich starken Faseranfall, haben also Einfluss auf den Füllstand des Filters. Das Drucksensor-Signal sollte sich in der Frequenz des Reversierens ändern. Daraus können sich Rückschlüsse auf die Art und Menge der Beladung ableiten lassen.

Die Informationen über die Wasserhärte umfassen Informationen über den Kalkgehalt des Wassers. Der Kalk selbst kann für eine zusätzliche, schnellere Filterbelegung sorgen, welche abhängig vom Filter-Design und dessen Trocknungsbedingungen ist. Dieser Einfluss ist vor allem bei Langzeit- bzw. Lebensdauerfiltern (welche ein oder mehrere Jahre im Einsatz sind) wichtig. Einen noch größeren Einfluss auf die Filterbelegung hat die auf die Wasserhärte abgestimmte Dosierungsempfehlung des Waschmittels. Bei hartem Wasser wird oft circa eine doppelt so hohe Menge an Waschmittel verwendet wie bei weichem Wasser. Da Waschmittelrückstände und vor allem ungelöste Waschmittelreste für eine erhebliche zusätzliche Belegung des Filters sorgen können, ist dieser Einfluss wesentlich für die Vorhersage der Filterbelegung. Um die Wasserhärte berücksichtigen zu können, ist eine Messung durch interne und/oder externe Sensorik möglich. Eine Eingabe kann durch den Nutzer am Gerät (d.h. der Waschmaschine) oder in einer App erfolgen. Es kann eine (automatische) Erkennung über die Einwahl in ein WLAN erfolgen, worüber der Ort und damit die ortstypische Wasserhärte bestimmt werden kann.

Die Informationen über die Konsistenz des Waschmittels umfassen Informationen darüber, ob ein flüssiges, gelartiges oder festes Waschmittel (d.h. ein Pulver) verwendet wurde. Eine Waschmaschine mit dem automatischen Dosiersystem ermöglicht die automatische Dosierung von Flüssigwaschmittel. Flüssigwaschmittel bewirkt eine längere Standzeit des Filters. Durch Pulverwaschmittel wird dem Filter deutlich mehr zugesetzt als durch Flüssigwaschmittel. Bei Flüssigwaschmittels ist der Filter erst später voll und muss erst später gewechselt oder gereinigt werden.

Die Informationen über die Programm- und Optionswahl des Nutzers ermöglichen, Rückschlüsse auf die wesentlichen Fasermaterialien der Wäsche zu ziehen. (Wasch)-Programme mit hohen Temperaturen (damit ist circa 60°C bis 95°C gemeint) werden fast ausschließlich für Baumwoll-Textilien genutzt. Programme wie "Sport", "Outdoor", "Delicates", oder "Dessous" lassen auf einen hohen Kunstfaseranteil (und oft geringe Beladungen) schließen. Bei anderen Programmen ist es schwieriger, deutliche Rückschlüsse zu ziehen. Es sollte daher von einer Textil-Mischung (unbekannter Zusammensetzung) ausgegangen werden. Vom Nutzer gewählte Optionen können Rückschlüsse auf die Filterbelegung zulassen. Zum Beispiel bewirkt ein "Extra-Spülgang" (d.h. ein zusätzlicher Spülgang oder Waschgang) mehr ausgeschwemmte Partikel. Die Option "Flecken" bedeutet mehr Waschmechanik und mehr ausgeschwemmte Partikel. Die Option "Speed Perfect" bewirkt mehr Waschmechanik und/oder höhere Temperaturen. Die Option "Eco Perfect" bewirkt weniger Waschmechanik und/oder niedrigere Temperaturen. Die Option "Vorwäsche" weist auf eine höhere Verschmutzung der Wäsche, mehr Waschmechanik und mehr Wasser hin (und jeweils eine schnellere Belegung des Filters). Aus der Programm- und Optionsauswahl lässt sich teilweise auf den Verschmutzungsgrad der Textilien schließen und damit auf die verwendete Waschmittelmenge. So wird bei "Vorwäsche" und "Flecken" eine erhöhte Waschmittelmenge wegen des erhöhten Verschmutzungsgrads angenommen.

Die Informationen über die Trübung des Fluids werden mittels eines Trübungssensors erlangt. Über den Trübungssensor im Laugensumpf werden Trübstoffe in der Lauge/Laugenflüssigkeit (d.h. Waschlauge) erkannt. Pulverwaschmittel lösen sich schlechter/langsamer als Flüssigwaschmittel. Dies kann über den Trübungssensor erfasst werden. Darüber hinaus werden mit dem Trübungssensor sonstige Partikel und Fasern erkannt, die zu einer Belegung des Filters führen können.

Das Ermitteln des Zustands des Filters wird basierend auf der Partikelfracht ermittelt. Der Zustand des Filters ist der Füllstand des Filters. Den Füllstand eines Filters, insbesondere eines Mikroplastikfilters in einer Waschmaschine, zu kennen ist vorteilhaft, um diesen zu einem optimalen Zeitpunkt zu leeren bzw. zu wechseln. Ist der Filter noch nicht voll, wäre ein Wechseln unnötig bzw. teuer. Wird der Filter zu spät gewechselt, kann es zum Abbruch des Waschprogramms kommen, da beispielsweise das Abpumpen nicht mehr möglich ist (wenn der Filter im Abpumpstrang eingebaut ist). Wesentlich für die Füllung des Filters verantwortlich sind die freigesetzten Fasern (anteilig wesentlich mehr Baumwolle als Kunstfasern), das Waschmittel (stark abhängig davon, welche Art und Menge verwendet wurde) und der Schmutz (Sand, Fett, Haare etc.). Um nun den aktuellen Füllstand des Filters zu erkennen bzw. qualifiziert abzuschätzen (möglichst ohne bzw. mit wenig zusätzlicher Sensorik), werden die Informationen aus der Maschine bzw. dem Waschprozess gesammelt und ausgewertet.

Mit der vorliegenden Erfindung kann die Anzahl von verbleibenden Zyklen eines Filters einer Waschmaschine bis zum Tausch oder bis zur Reinigung des Filters, speziell eines Mikroplastikfilters, abgeschätzt werden. Dies gelingt ohne zusätzliche Sensorik. Vorteile der Erfindung sind, dass die Filterstandzeit weiter ausgereizt werden kann als mit einfachem Zählen der Zyklen (da qualifiziert gezählt wird). Es kann z.B. eine 25% längere Standzeit, also entsprechend weniger Wartungsaufwand für den Nutzer, erreicht werden. Bei Wegwerf-Filtern (d.h. Einwegfiltern) entstehen entsprechend weniger Müll und weniger Kosten für den Nutzer.

**Figur 2** zeigt eine Waschmaschine 1 mit einer drehbaren Waschtrommel 5, welche dazu ausgestaltet ist, zu waschende Textilien aufzunehmen und einen Filter 2, welcher dazu ausgestaltet ist, Partikel aus dem Leitungswasser und/oder dem Waschwasser zu filtern. Die Waschmaschine umfasst eine Einspülschale 6, welche dazu ausgestaltet ist, ein Behandlungsmittel aufzunehmen. Die Waschmaschine weist eine Steuereinheit 3 auf, welche dazu ausgestaltet ist, das erfindungsgemäße Verfahren auszuführen. Ferner umfasst die Waschmaschine ein Display 4, welches dazu ausgestaltet ist, den von der Steuereinheit 3 ermittelten Zustand des Filters 2 auszugeben.

### Bezugszeichenliste:

- 1: Waschmaschine
- 2: Filter
- 3: Steuereinheit
- 4: Display
- 5: Waschtrommel
- 6: Einspülschale

## Patentansprüche

1. Verfahren zum Bestimmen eines Zustands eines Filters (2) eines wasserführenden Haushaltsgeräts (1), wobei der Filter (2) dazu ausgestaltet ist, Partikel aus einem Fluid zu filtern, wobei das Verfahren umfasst:
- Erlangen von Betriebsinformationen des wasserführenden Haushaltsgeräts (1); und
- Ermitteln des Zustands des Filters (2) basierend auf den Betriebsinformationen,
wobei der Zustand des Filters (2) basierend auf der von dem Filter (2) zu filternden Partikelfracht ermittelt wird,
welche Partikelfracht basierend auf den Betriebsinformationen bestimmt wird, wobei die Betriebsinformationen Informationen über
b) eine Beladung des wasserführenden Haushaltsgeräts (1) mit zu behandelnden Artikeln;
c) eine Beschaffenheit der zu behandelnden Artikel;
d) eine Beschaffenheit eines zur Verfügung stehenden Behandlungsmediums;
e) eine Beschaffenheit eines oder mehrerer Behandlungsmittel;
f) eine Art eines Behandlungsvorgangs;
g) eine Trübung des Fluids und/oder
h) eine Wassermenge umfassen
- Ausgabe von Informationen über den Zustand des Filters (2) an einen Nutzer.

2. Verfahren gemäß Anspruch 1, wobei die Betriebsinformationen zusätzlich Informationen über a) eine Anzahl von Behandlungsvorgängen umfassen.

3. Verfahren gemäß Anspruch 2, wobei die Informationen über a) von einer Zähleinheit; und/oder von einer Datenbank erlangt werden.

4. Verfahren gemäß einem der Ansprüche 1 bis 3, wobei die Informationen über b) basierend auf gravimetrischen Daten des wasserführenden Haushaltsgeräts (1), einem Saugverhalten der Artikel, und/oder einem Flüssigkeitsabgabeverhalten der Artikel bestimmt werden.

5. Verfahren gemäß einem der Ansprüche 1 bis 4, wobei die Informationen über c) basierend auf einem Saugverhalten der Artikel, einem Flüssigkeitsabgabeverhalten der Artikel und/oder einer Art des Behandlungsvorgangs bestimmt werden.

6. Verfahren gemäß einem der Ansprüche 1 bis 5, wobei die Informationen über d) basierend auf einer Nutzereingabe und/oder abgespeicherten Daten bestimmt werden.

7. Verfahren gemäß einem der Ansprüche 1 bis 6, wobei die Informationen über e) basierend auf einer Nutzereingabe und/oder abgespeicherten Daten bestimmt werden.

8. Verfahren gemäß einem der Ansprüche 1 bis 7, wobei die Informationen über f) basierend auf einer Dauer des Behandlungsvorgangs, einer Menge eines zu verwendenden Behandlungsmittels, einer Behandlungstemperatur, einer mechanischen Belastung der Artikel während des Behandlungsvorgangs, und/oder von einem Nutzer ausgewählten Optionen bestimmt werden.

9. Verfahren gemäß einem der Ansprüche 1 bis 8, wobei die Informationen über g) basierend auf Daten eines Trübungssensors bestimmt werden.

10. Wasserführendes Haushaltsgerät (1), umfassend:
einen Filter (2), welcher dazu ausgestaltet ist, Partikel aus einem Fluid zu filtern;
eine Steuereinheit (3), welche dazu ausgestaltet ist, das Verfahren gemäß einem der vorhergehenden Ansprüche auszuführen, um den Zustand des Filters (2) zu ermitteln; und
eine Anzeigeeinheit (4);
wobei die Steuereinheit (3) ferner dazu ausgestaltet ist, den ermittelten Zustand des Filters (2) an die Anzeigeeinheit (4) zu übermitteln,
und wobei die Anzeigeeinheit (4) dazu ausgestaltet ist, den ermittelten Zustand des Filters (2) von der Steuereinheit (3) zu erlangen und den Zustand des Filters (2) auszugeben.

## Claims

1. Method for determining a state of a filter (2) of a water-conducting household appliance (1), wherein the filter (2) is designed to filter particles out of a fluid, wherein the method comprises:
- obtaining operating information of the water-conducting household appliance (1); and
- ascertaining the state of the filter (2) on the basis of the operating information, wherein the state of the filter (2) is ascertained on the basis of the particle load to be filtered out by the filter (2),
which particle load is determined on the basis of the operating information,
wherein the operating information comprises information about
b) a load of the water-conducting household appliance (1) with articles to be treated;
c) a condition of the articles to be treated;
d) a condition of an available treatment agent;
e) a condition of one or more treatment agents;
f) a type of treatment process;
g) a turbidity of the fluid and/or
h) a water quantity
- outputting information about the state of the filter (2) to a user.

2. Method according to claim 1, wherein the operating information additionally comprises information about a) a number of treatment processes.

3. Method according to claim 2, wherein the information about a) is obtained from a counter unit; and/or from a database.

4. Method according to one of claims 1 to 3, wherein the information about b) is determined on the basis of gravimetric data from the water-conducting household appliance (1), an absorption behaviour of the articles and/or a liquid delivery behaviour of the articles.

5. Method according to one of claims 1 to 4, wherein the information about c) is determined on the basis of an absorption behaviour of the articles, a liquid delivery behaviour of the articles and/or a type of treatment process.

6. Method according to one of claims 1 to 5, wherein the information about d) is determined on the basis of a user input and/or stored data.

7. Method according to one of claims 1 to 6, wherein the information about e) is determined on the basis of a user input and/or stored data.

8. Method according to one of claims 1 to 7, wherein the information about f) is determined on the basis of a duration of the treatment process, a quantity of treatment agent to be used, a treatment temperature, a mechanical load of the articles during the treatment process, and/or options selected by a user.

9. Method according to one of claims 1 to 8, wherein the information about g) is determined on the basis of data of a turbidity sensor.

10. Water-conducting household appliance (1), comprising:
a filter (2), which is designed to filter particles out of a fluid;
a control unit (3) which is designed to execute the method according to one of the preceding claims in order to determine the state of the filter (2); and
a display unit (4);
wherein the control unit (3) is further designed to transfer the determined state of the filter (2) to the display unit (4),
and wherein the display unit (4) is designed to obtain the determined state of the filter (2) from the control unit (3) and to output the state of the filter (2).

## Revendications

1. Procédé de détermination d'un état d'un filtre (2) d'un appareil ménager à circulation d'eau (1), dans lequel le filtre (2) est aménagé pour filtrer des particules d'un fluide, dans lequel le procédé comprend :
- l'obtention d'informations sur le fonctionnement de l'appareil ménager à circulation d'eau (1) ; et
- l'établissement de l'état du filtre (2) sur la base des informations sur le fonctionnement,
dans lequel l'état du filtre (2) est établi sur la base de la charge de particules à filtrer par le filtre (2),
laquelle charge de particules est déterminée sur la base des informations sur le fonctionnement,
- dans lequel les informations sur le fonctionnement comprennent des informations sur
b) un chargement de l'appareil ménager à circulation d'eau (1) en articles à traiter ;
c) une propriété des articles à traiter ;
d) une propriété d'un milieu de traitement disponible ;
e) une propriété d'un ou plusieurs agent(s) de traitement ;
f) une nature d'un processus de traitement ;
g) une turbidité du fluide et/ou
h) une quantité d'eau
- l'émission à un utilisateur d'informations sur l'état du filtre (2).

2. Procédé selon la revendication 1, dans lequel les informations sur le fonctionnement comprennent en outre des informations sur a) un nombre de processus de traitement.

3. Procédé selon la revendication 2, dans lequel les informations sur a) sont obtenues d'une unité de comptage et/ou d'une base de données.

4. Procédé selon l'une des revendications 1 à 3, dans lequel les informations sur b) sont déterminées sur la base de données gravimétriques de l'appareil ménager à circulation d'eau (1), d'un comportement d'absorption des articles et/ou d'un comportement de libération de liquide des articles.

5. Procédé selon l'une des revendications 1 à 4, dans lequel les informations sur c) sont déterminées sur la base d'un comportement d'absorption des articles, d'un comportement de libération de liquide des articles et/ou d'une nature du processus de traitement.

6. Procédé selon l'une quelconque des revendications 1 à 5, dans lequel les informations sur d) sont déterminées sur la base d'une saisie d'utilisateur et/ou de données enregistrées.

7. Procédé selon l'une quelconque des revendications 1 à 6, dans lequel les informations sur e) sont déterminées sur la base d'une saisie d'utilisateur et/ou de données enregistrées.

8. Procédé selon l'une quelconque des revendications 1 à 7, dans lequel les informations sur f) sont déterminées sur la base d'une durée du processus de traitement, d'une quantité d'un agent de traitement à utiliser, d'une température de traitement, d'une charge mécanique des articles durant le processus de traitement, et/ou d'options sélectionnées par un utilisateur.

9. Procédé selon l'une quelconque des revendications 1 à 8, dans lequel les informations sur g) sont déterminées sur la base de données d'un capteur de turbidité.

10. Appareil ménager à circulation d'eau (1) comprenant :
un filtre (2) aménagé pour filtrer les particules d'un fluide ;
une unité de commande (3) aménagée pour exécuter le procédé selon l'une des revendications précédentes pour établir l'état du filtre (2) ; et
une unité d'affichage (4) ;
dans lequel l'unité de commande (3) est en outre aménagée pour transmettre l'état établi du filtre (2) à l'unité d'affichage (4),
et dans lequel l'unité d'affichage (4) est aménagée pour obtenir l'état établi du filtre (2) de l'unité de commande (3) et pour émettre l'état du filtre (2).
